# EUROPÄISCHE PATENTSCHRIFT

(11) **EP 3 519 776 B1**
(45) Veröffentlichungstag und Bekanntmachung des Hinweises auf die Patenterteilung: **16.06.2021**
(21) Anmeldenummer: 17768052.7
(22) Anmeldetag: 07.09.2017
(51) Int. Cl.: G01D 5/14, H02H 7/085

(54) **VERFAHREN UND STEUERGERÄT ZUM BETREIBEN EINER AKTORVORRICHTUNG UND AKTORSYSTEM**
METHOD AND CONTROL DEVICE FOR OPERATING AN ACTUATOR DEVICE
AND ACTUATING SYSTEM
PROCÉDÉ ET DISPOSITIF DE COMMANDE POUR FAIRE FONCTIONNER UN DISPOSITIF ACTIONNEUR ET SYSTÈME D'ACTIONNEMENT

(30) Priorität: 28.09.2016 DE 102016218761
(43) Veröffentlichungstag der Anmeldung: 07.08.2019
(73) Patentinhaber: ZF Friedrichshafen AG, 88046 Friedrichshafen (DE)
(72) Erfinder: TRÄNKNER, Sascha, 49453 Rehden (DE); KLIEMANNEL, Wolfgang, 49448 Lemförde (DE)
(74) Vertreter: ZF Friedrichshafen AG
(86) Internationale Anmeldenummer: PCT/EP2017/072404
(87) Internationale Veröffentlichungsnummer: WO 2018/059899

(56) Entgegenhaltungen:
- DE-A1- 4 444 762
- DE-A1- 19 533 193
- DE-A1- 19 800 194
- DE-A1-102014 113 500

## Beschreibung

Die vorliegende Erfindung bezieht sich auf ein Verfahren zum Betreiben einer Aktorvorrichtung, auf ein entsprechendes Steuergerät, auf ein Aktorsystem und auf ein entsprechendes Computerprogrammprodukt.

Zur Positionserfassung bei Stellgliedern können insbesondere codierte Magnetfeldplatten eingesetzt werden, wobei wird aus einer entstehenden Bitfolge eine Position bestimmt wird, d. h. ein Bedämpfen keines Sensorelementes stellt beispielsweise lediglich eine Position dar. Die DE4444762A1 zeigt einen Elektromotor, der über eine mechanische Kopplung ein zu verstellendes Teil antreibt. Das zu verstellende Teil kann unterschiedliche Positionen einnehmen, und der Verstellweg des zu verstellenden Teils ist von Endanschlägen begrenzt.

Vor diesem Hintergrund schafft die vorliegende Erfindung ein verbessertes Verfahren zum Betreiben einer Aktorvorrichtung, ein verbessertes Steuergerät, ein verbessertes Aktorsystem und ein verbessertes Computerprogrammprodukt gemäß den Hauptansprüchen. Vorteilhafte Ausgestaltungen ergeben sich aus den Unteransprüchen und der nachfolgenden Beschreibung.

Gemäß Ausführungsformen der vorliegenden Erfindung kann für eine Aktorvorrichtung eine Positionsbestimmung von beispielsweise drei Positionen insbesondere unter zusätzlicher Berücksichtigung einer Antriebsrichtung bzw. Drehrichtung eines Antriebs der Aktorvorrichtung sowie einer Leistungsaufnahme bzw. Stromaufnahme des Antriebs auch mittels lediglich eines Magnetfeldsensors realisiert werden. Anders ausgedrückt kann insbesondere eine eineindeutige Positionserkennung von beispielsweise drei Positionen einer Aktuatorik, welche durch einen Antrieb bewegt wird, bei lediglich einem digitalen Sensor Beziehung Weise Magnetfeldsensor erreicht werden. Die Erfassung kann beispielsweise auch indirekt durch Erkennung eines Übergangsbereiches zwischen Signalflanken eines Magnetfeldsensorsignals und einen Anstieg einer Leistungsaufnahme des Antriebs in Abhängigkeit von der Antriebsrichtung und eines mechanischen Endanschlages erreicht werden.

Vorteilhafterweise kann gemäß Ausführungsformen der vorliegenden Erfindung insbesondere eine kostentechnisch günstige Erfassung von beispielsweise drei Positionen einer Aktorvorrichtung mit lediglich einem digitalen Sensor bzw. Magnetfeldsensor ermöglicht werden. Somit kann eine eindeutige und zuverlässige Positionserkennung von beispielsweise drei Positionen einer Aktuatorik mit lediglich einem Sensor erreicht werden. Durch Berücksichtigen der Antriebsrichtung bzw. Drehrichtung des Antriebs der Aktorvorrichtung können mit einem Sensor beispielsweise drei Positionen codiert bzw. erfasst werden. Aufgrund mechanischer Endanschläge können dabei zudem Positionen beispielsweise unter Verwendung eines Antriebsstromes plausibilisiert werden.

Es wird ein Verfahren zum Betreiben einer Aktorvorrichtung vorgestellt, wobei die Aktorvorrichtung ein magnetisches Stellelement, zumindest einen Magnetfeldsensor zum Erfassen eines Magnetfeldes des Stellelements und eine Antriebseinrichtung zum Bewegen des Stellelements zwischen zwei mechanischen Endanschlägen relativ zu dem zumindest einen Magnetfeldsensor aufweist, dadurch gekennzeichnet, dass das Verfahren zumindest folgende Schritte aufweist:
Einlesen eines Sensorsignals von einer Schnittstelle zu dem zumindest einen Magnetfeldsensor und eines Antriebssignals von einer Schnittstelle zu der Antriebseinrichtung, wobei das Sensorsignal mindestens eine Magnetfeldcharakteristik eines Magnetfeldes des Stellelements repräsentiert, wobei das Antriebssignal eine Antriebsrichtung und eine Leistungsaufnahme der Antriebseinrichtung repräsentiert;
Ermitteln einer Position des Stellelements unter Verwendung des Sensorsignals und/oder des Antriebssignals;
Erzeugen eines Zustandssignals unter Verwendung der ermittelten Position, wobei das Zustandssignal einen Betätigungszustand der Aktorvorrichtung repräsentiert; und
Bereitstellen des Zustandssignals zur Ausgabe an einer Ausgabeschnittstelle.

Die Aktorvorrichtung kann beispielsweise in einem Fahrzeug oder in Verbindung mit einem Fahrzeug verwendet werden bzw. für ein Fahrzeug vorgesehen sein. Bei dem Fahrzeug kann es sich um ein Kraftfahrzeug handeln. Insbesondere kann die Aktorvorrichtung als ein Teil eines oder als ein Parksperrenaktuator eines Fahrzeugs eingesetzt oder verwendet werden. Die Magnetfeldcharakteristik kann eine Veränderung, eine Feldstärke oder dergleichen des Magnetfeldes von dem Stellelement repräsentieren. Der Magnetfeldsensor kann als ein digitaler Sensor ausgeführt sein. Unter der Antriebsrichtung kann eine Drehrichtung der Antriebseinrichtung verstanden werden. Die Leistungsaufnahme der Antriebseinrichtung kann eine elektrische Stromaufnahme repräsentieren. Die ermittelte Position des Stellelements kann einem Betätigungszustand der Aktorvorrichtung zugeordnet sein.

Gemäß einer Ausführungsform kann im Schritt des Ermittelns die Position des Stellelements unter Verwendung eines Verlaufs zumindest einer Signalflanke des Sensorsignals ermittelt werden. Hierbei kann der Verlauf einer Signalflanke beispielsweise steigend oder fallend sein. Eine solche Ausführungsform bietet den Vorteil, dass ein Bewegungszustand und somit auch eine Position des Stellelements zwischen den Endanschlägen unaufwendig und sicher ermittelt werden kann.

Auch kann im Schritt des Ermittelns die Position des Stellelements unter Verwendung der Antriebsrichtung und zusätzlich oder alternativ der Leistungsaufnahme der Antriebseinrichtung ermittelt werden. Hierbei kann aus der Antriebsrichtung darauf geschlossen werden, zu welchem der Endanschläge das Stellelement sich bewegt. Aus der Leistungsaufnahme kann darauf geschlossen werden, ob das Stellelement sich bereits gegen einen der Endanschläge in Anlage befindet. Eine solche Ausführungsform bietet den Vorteil, dass auf einfache und zuverlässige Weise zwei Positionen des Stellelements an den Enden von dessen Bewegungsweg ermittelt werden können.

Vorteilhafterweise kann im Schritt des Ermittelns die Position des Stellelements als eine erste Position an einem ersten der Endanschläge, als eine zweite Position zwischen den Endanschlägen oder als eine dritte Position an einem zweiten der Endanschläge ermittelt werden. In der ersten Position und in der dritten Position kann das Stellelement in Anlage gegen einen der Endanschläge angeordnet sein. In der zweiten Position kann das Stellelement von den Endanschlägen beabstandet angeordnet sein. Eine solche Ausführungsform bietet den Vorteil, dass drei Positionen eindeutig bestimmt werden können.

Dabei kann im Schritt des Ermittelns die erste Position oder die dritte Position abhängig von der Antriebsrichtung der Antriebseinrichtung ermittelt werden, wenn auf eine Signalflanke des Sensorsignals hin die Leistungsaufnahme der Antriebseinrichtung eine vordefinierte Anstiegscharakteristik aufweist. Auch kann im Schritt des Ermittelns die zweite Position unabhängig von der Antriebsrichtung der Antriebseinrichtung bei Vorliegen eines Übergangsbereichs zwischen zwei Signalflanken des Sensorsignals ermittelt werden. Hierbei kann die zweite Position erreicht sein, wenn das Sensorsignal den Übergangsbereich zeigt. Eine solche Ausführungsform bietet den Vorteil, dass eine zuverlässige und eindeutige Erfassung dreier verschiedener Positionen ermöglicht werden kann, wobei eine Position direkt durch den Magnetfeldsensor erfasst werden kann und zwei Positionen indirekt auf Basis der Antriebsrichtung bzw. Drehrichtung des Antriebs und auf Basis des Signalverlaufes des Magnetfeldsensors erfasst werden können.

Ferner kann das Verfahren einen Schritt des Ansteuerns der Antriebseinrichtung aufweisen. Hierbei kann im Schritt des Ansteuerns die Antriebseinrichtung unter Verwendung des Antriebssignals und zusätzlich oder alternativ des Zustandssignals angesteuert werden. Eine solche Ausführungsform bietet den Vorteil, dass die Aktorvorrichtung sicher betätigt werden kann, insbesondere unter genauer Kenntnis eines aktuellen und eines nach dem Betätigen erreichten Betätigungszustandes.

Dabei kann im Schritt des Ansteuerns die Antriebseinrichtung angesteuert werden, um das Stellelement in eine Sollposition zu bewegen. Hierbei können ansprechend auf den Schritt des Ansteuerns zumindest der Schritt des Einlesens und der Schritt des Ermittelns ausgeführt werden, um zu bestimmen, ob sich das Stellelement ansprechend auf den Schritt des Ansteuerns bewegt. Auch kann dabei im Schritt des Ansteuerns die Antriebseinrichtung unter Verwendung lediglich des Antriebssignals angesteuert werden. Eine solche Ausführungsform bietet den Vorteil, dass beispielsweise auf eine Initialisierung der Aktorvorrichtung hin schnell und einfach eine Sollposition des Stellelements angefahren werden kann und abhängig davon, ob sich das Stellelement bewegt hat oder nicht, auf eine Position bei der Initialisierung geschlossen werden kann.

Zudem kann im Schritt des Ermittelns ein Signalverlauf des Sensorsignals unter Verwendung der Antriebsrichtung und zusätzlich oder alternativ der Leistungsaufnahme der Antriebseinrichtung auf Plausibilität geprüft werden. Eine solche Ausführungsform bietet den Vorteil, dass eine zuverlässige und schnelle Prüfung der Plausibilität des Signalverlaufes auf Basis des Antriebsstromes gegen den Endanschlag realisiert werden kann.

Es wird ferner ein Steuergerät vorgestellt, das ausgebildet ist, um die Schritte einer Ausführungsform des vorstehend genannten Verfahrens auszuführen.

Somit ist das Verfahren zum Betreiben mittels des Steuergerätes vorteilhaft ausführbar. Das Steuergerät kann ein elektrisches Gerät sein, das elektrische Signale, beispielsweise Sensorsignale verarbeitet und in Abhängigkeit davon Steuersignale ausgibt. Das Steuergerät kann eine geeignete Schnittstelle oder mehrere geeignete Schnittstellen aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen des Steuergerätes umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird zudem ein Aktorsystem vorgestellt, das zumindest folgende Merkmale aufweist:
zumindest eine Aktorvorrichtung, die ein magnetisches Stellelement, zumindest einen Magnetfeldsensor zum Erfassen eines Magnetfeldes des Stellelements und eine Antriebseinrichtung zum Bewegen des Stellelements zwischen zwei mechanischen Endanschlägen relativ zu dem zumindest einen Magnetfeldsensor aufweist; und
eine Ausführungsform des vorstehend genannten Steuergerätes, wobei das Steuergerät signalübertragungsfähig mit der zumindest einen Aktorvorrichtung verbindbar oder verbunden ist.

In Verbindung mit dem Aktorsystem kann eine Ausführungsform des vorstehend genannten Steuergerätes vorteilhaft eingesetzt oder verwendet werden, um die Aktorvorrichtung zu betreiben, insbesondere einen Betätigungszustand der Aktorvorrichtung zu bestimmen und zusätzlich oder alternativ die Aktorvorrichtung anzusteuern. Das Aktorsystem kann beispielsweise in einem Fahrzeug oder in Verbindung mit einem Fahrzeug verwendet werden bzw. für ein Fahrzeug vorgesehen sein. Bei dem Fahrzeug kann es sich um ein Kraftfahrzeug handeln. Insbesondere kann das Aktorsystem als ein Teil eines oder als ein Parksperrenaktuator eines Fahrzeugs oder als ein Teil eines Getriebes eines Fahrzeugs eingesetzt oder verwendet werden.

Gemäß einer Ausführungsform kann das Stellelement länglich ausgeformt sein. Hierbei kann das Stellelement an zwei voneinander abgewandten Endabschnitten einen ersten Magnetpol und in einem Mittelabschnitt zwischen den Endabschnitten einen zweiten Magnetpol aufweisen. Eine solche Ausführungsform bietet den Vorteil, dass von diesem Stellelement mittels des Magnetfeldsensors ein aussagekräftiges Sensorsignal erhalten werden kann.

Auch kann der zumindest eine Magnetfeldsensor zwischen den Endanschlägen angeordnet sein. Insbesondere kann der zumindest eine Magnetfeldsensor mittig zwischen den Endanschlägen angeordnet sein. Eine solche Ausführungsform bietet den Vorteil, dass eine von Positionen des Stellelements in Anlage gegen Endanschläge verschiedene Position einfach und auf direkte Weise erfasst werden kann.

Ferner kann die Aktorvorrichtung eine Mehrzahl von Magnetfeldsensoren aufweisen. Eine solche Ausführungsform bietet den Vorteil, dass durch Redundanz eine Sicherheit der Aktorvorrichtung erhöht werden kann und beispielsweise Einfachfehler erkannt und korrigiert werden können. Durch Verwendung von mehreren Magnetfeldsensoren, die beispielsweise eine Position des Stellelements zwischen den Endanschlägen erfassen können, kann somit auch zumindest eine sicherheitsrelevante Position codiert werden sowie eine Verfügbarkeit im Einfachfehlerfall realisiert werden.

Zudem kann die Aktorvorrichtung oder das Steuergerät eine Ansteuereinrichtung zum Ansteuern der Antriebseinrichtung aufweisen. Eine solche Ausführungsform bietet den Vorteil, dass die Aktorvorrichtung sicher betätigt werden kann, insbesondere unter genauer Kenntnis eines vor dem Betätigen und eines nach dem Betätigen herrschenden Betätigungszustandes.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einem Steuergerät ausgeführt wird.

Die Erfindung wird anhand der beigefügten Zeichnungen beispielhaft näher er-läutert. Es zeigen:
Fig. 1 eine schematische Darstellung eines Aktorsystems gemäß einem Ausführungsbeispiel der vorliegenden Erfindung in einem Fahrzeug;
Fig. 2 ein Ablaufdiagramm eines Verfahrens zum Betreiben gemäß einem Ausführungsbeispiel der vorliegenden Erfindung;
Fig. 3 eine schematische Darstellung eines ersten Betätigungszustands der Aktorvorrichtung aus Fig. 1;
Fig. 4 eine schematische Darstellung eines zweiten Betätigungszustands der Aktorvorrichtung aus Fig. 1; und
Fig. 5 eine schematische Darstellung eines dritten Betätigungszustands der Aktorvorrichtung aus Fig. 1.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

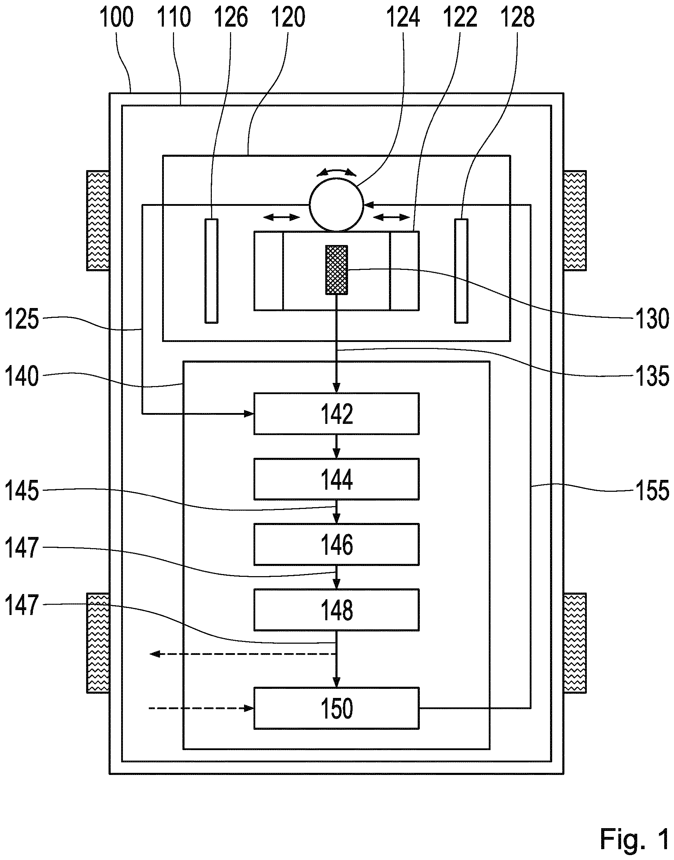

Fig. 1 zeigt eine schematische Darstellung eines Aktorsystems 110 gemäß einem Ausführungsbeispiel der vorliegenden Erfindung in einem Fahrzeug 100. Von dem Aktorsystem 110 sind gemäß dem in Fig. 1 gezeigten Ausführungsbeispiel der vorliegenden Erfindung beispielhaft lediglich eine Aktorvorrichtung 120 und ein Steuergerät 140 dargestellt. Das Steuergerät 140 ist ausgebildet, um die Aktorvorrichtung 120 zu betreiben. Dabei sind die Aktorvorrichtung 120 und das Steuergerät 140 signalübertragungsfähig miteinander verbunden.

Die Aktorvorrichtung 120 weist ein magnetisches Stellelement 122, eine Antriebseinrichtung 124, einen ersten mechanischen Endanschlag 126 sowie einen zweiten mechanischen Endanschlag 128 und beispielhaft lediglich einen Magnetfeldsensor 130 auf. Gemäß einem Ausführungsbeispiel kann die Aktorvorrichtung 120 eine Mehrzahl von Magnetfeldsensoren 130 aufweisen.

Die Antriebseinrichtung 124 der Aktorvorrichtung 120 ist ausgebildet, um das Stellelement 122 relativ zu dem Magnetfeldsensor 130 zwischen dem ersten Endanschlag 126 und dem zweiten Endanschlag 128 zu bewegen. An der Antriebseinrichtung 124 ist ein Antriebssignal 125 abgreifbar. Das Antriebssignal repräsentiert dabei eine Antriebsrichtung bzw. Drehrichtung und eine Leistungsaufnahme bzw. elektrische Stromaufnahme der Antriebseinrichtung 124.

Der Magnetfeldsensor 130 der Aktorvorrichtung 120 ist ausgebildet, um ein Magnetfeld des Stellelements 122 zu erfassen. Ferner ist der Magnetfeldsensor 130 ausgebildet, um ein Sensorsignal 135 bereitzustellen. Das Sensorsignal 135 repräsentiert mindestens eine Magnetfeldcharakteristik des Magnetfeldes des Stellelements 122, beispielsweise eine magnetische Feldstärke oder dergleichen. Dabei ist der Magnetfeldsensor 130 zwischen dem ersten Endanschlag 126 und dem zweiten Endanschlag 128 angeordnet.

Das Steuergerät 140 weist eine Einleseeinrichtung 142, eine Ermittlungseinrichtung 144, eine Erzeugungseinrichtung 146 und eine Bereitstellungseinrichtung 148 auf. Die Einleseeinrichtung 142 ist ausgebildet, um das Antriebssignal 125 von einer Schnittstelle zu der Antriebseinrichtung 124 und das Sensorsignal 135 von einer Schnittstelle zu dem Magnetfeldsensor 130 einzulesen. Ferner ist die Einleseeinrichtung 142 ausgebildet, um das Antriebssignal 125 und das Sensorsignal 135 an die Ermittlungseinrichtung 144 weiterzuleiten.

Die Ermittlungseinrichtung 144 des Steuergerätes 140 ist ausgebildet, um unter Verwendung des Antriebssignals 125 und/oder des Sensorsignals 135 eine Position des Stellelements 122 der Aktorvorrichtung 120 zu ermitteln. Auch ist die Ermittlungseinrichtung 144 ausgebildet, um eine die ermittelte Position repräsentierende Positionsinformation 145 an die Erzeugungseinrichtung 146 auszugeben oder derselben bereitzustellen.

Die Erzeugungseinrichtung 146 des Steuergerätes 140 ist ausgebildet, um die Positionsinformation 145 zu empfangen. Zudem ist die Erzeugungseinrichtung 146 ausgebildet, um unter Verwendung der ermittelten Position ein Zustandssignal 147 zu erzeugen. Das Zustandssignal 147 repräsentiert hierbei einen Betätigungszustand der Aktorvorrichtung 120. Der Betätigungszustand korreliert insbesondere mit der Position des Stellelements 122 der Aktorvorrichtung 120.

Die Bereitstellungseinrichtung 148 des Steuergerätes 140 ist ausgebildet, um das erzeugte Zustandssignal 147 zur Ausgabe an eine Ausgabeschnittstelle bereitzustellen. Bei der Ausgabeschnittstelle handelt es sich beispielsweise um einen elektrischen Anschluss der Bereitstellungseinrichtung 148 bzw. des Steuergerätes 140.

Gemäß dem in Fig. 1 gezeigten Ausführungsbeispiel der vorliegenden Erfindung weist das Steuergerät 140 ferner eine Ansteuereinrichtung 150 zum Ansteuern der Antriebseinrichtung 124 unter Verwendung des Zustandssignals 147 und/oder des Antriebssignals 125 oder eines davon hergeleiteten Signals auf. Hierbei ist die Bereitstellungseinrichtung 148 ausgebildet, um das erzeugte Zustandssignal 147 an die Ausgabeschnittstelle zu der Ansteuereinrichtung 150 und optional zu einer anderen Einrichtung bereitzustellen.

Die Ansteuereinrichtung 150 ist ausgebildet, um ein Ansteuersignal 155 an die Antriebseinrichtung 124 auszugeben. Das Ansteuersignal 155 ist zumindest teilweise von dem Antriebsignal 125 und/oder dem Zustandssignal 147 hergeleitet. Optional kann die Ansteuereinrichtung 150 auch ein zur Ansteuerung geeignetes Signal von außerhalb des Steuergerätes 140 empfangen. Gemäß einem anderen Ausführungsbeispiel kann die an Steuereinrichtung 150 auch außerhalb des Steuergerätes 140 und als Teil der Aktorvorrichtung 120 ausgeführt sein.

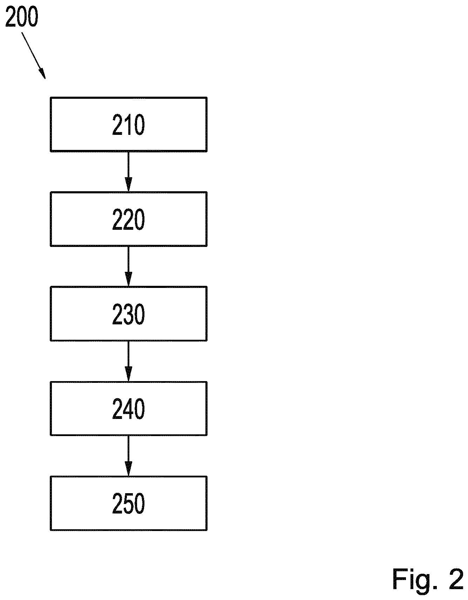

Fig. 2 zeigt ein Ablaufdiagramm eines Verfahrens 200 zum Betreiben gemäß einem Ausführungsbeispiel der vorliegenden Erfindung. Bei dem Verfahren 200 handelt es sich um ein Verfahren 200 zum Betreiben einer Aktorvorrichtung. Dabei ist das Verfahren 200 zum Betreiben ausführbar, um eine Aktorvorrichtung zu betreiben, welche der Aktorvorrichtung aus Fig. 1 entspricht oder ähnelt. Das Verfahren 200 zum Betreiben ist mittels des Steuergerätes aus Fig. 1 oder eines ähnlichen Steuergerätes ausführbar. Hierbei ist das Steuergerät aus Fig. 1 ausgebildet, um die Schritte des Verfahrens 200 zum Betreiben in entsprechenden Einrichtungen auszuführen.

In einem Schritt 210 des Einlesens werden bei dem Verfahren 200 ein Sensorsignal von einer Schnittstelle zu dem zumindest einen Magnetfeldsensor und ein Antriebssignal von einer Schnittstelle zu der Antriebseinrichtung eingelesen. Das Sensorsignal repräsentiert mindestens eine Magnetfeldcharakteristik eines Magnetfeldes des Stellelements. Das Antriebssignal repräsentiert eine Antriebsrichtung und eine Leistungsaufnahme der Antriebseinrichtung.

Nachfolgend wird in einem Schritt 220 des Ermittelns unter Verwendung des Sensorsignals und/oder des Antriebssignals eine Position des Stellelements ermittelt. Dann wird in einem Schritt 230 des Erzeugens unter Verwendung der ermittelten Position ein Zustandssignal erzeugt, das einen Betätigungszustand der Aktorvorrichtung repräsentiert. Nachfolgend wird in einem Schritt 240 des Bereitstellens das Zustandssignal zur Ausgabe an einer Ausgabeschnittstelle bereitgestellt.

Gemäß einem Ausführungsbeispiel wird im Schritt 220 des Ermittelns die Position des Stellelements unter Verwendung eines Verlaufs zumindest einer Signalflanke des Sensorsignals ermittelt. Gemäß einem weiteren Ausführungsbeispiel wird im Schritt 220 des Ermittelns die Position des Stellelements unter Verwendung der Antriebsrichtung und/oder der Leistungsaufnahme der Antriebseinrichtung ermittelt. Gemäß dem in Fig. 2 dargestellten Ausführungsbeispiel der vorliegenden Erfindung weist das Verfahren 200 zum Betreiben ferner einen Schritt 250 des Ansteuerns der Antriebseinrichtung auf. Hierbei wird im Schritt 250 des Ansteuerns die Antriebseinrichtung unter Verwendung des Antriebssignals und/oder des Zustandssignals angesteuert.

Die Schritte 210, 220, 230, 240 und/oder 250 des Verfahrens 200 zum Betreiben sind wiederholt und/oder kontinuierlich ausführbar.

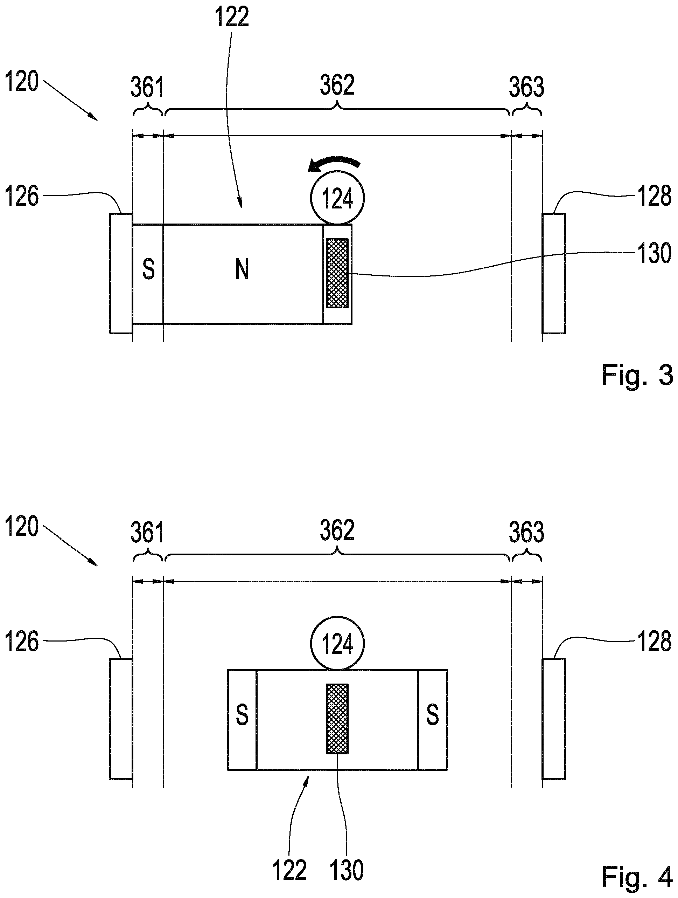

Fig. 3 zeigt eine schematische Darstellung eines ersten Betätigungszustands der Aktorvorrichtung 120 aus Fig. 1. Gemäß dem hier gezeigten Ausführungsbeispiel ist das Stellelement 122 länglich ausgeformt. Hierbei ist erkennbar, dass das Stellelement 122 an zwei voneinander abgewandten Endabschnitten einen ersten Magnetpol, hier lediglich beispielhaft einen magnetischen Südpol S, und in einem Mittelabschnitt zwischen den Endabschnitten einen zweiten Magnetpol, hier lediglich beispielhaft einen magnetischen Nordpol N, aufweist. Ferner sind eine erste Position 361, eine zweite Position 362 und eine dritte Position 363 des Stellelements 122 in Fig. 3 veranschaulicht.

In dem ersten Betätigungszustand ist das Stellelement 122 an dem ersten Endanschlag 126 angeordnet. Dabei ist das Stellelement 122 in der ersten Position 361 angeordnet. Genauer gesagt befindet sich einer der Endabschnitte des Stellelements 122 in Anlage gegen den ersten Endanschlag 126. In Fig. 3 ist zudem ein Beginn einer Bewegung des Stellelements 122 durch eine Drehbewegung der Antriebseinrichtung 124 symbolisch veranschaulicht.

Fig. 4 zeigt eine schematische Darstellung eines zweiten Betätigungszustands der Aktorvorrichtung 120 aus Fig. 1. Hierbei entspricht die Darstellung in Fig. 4 der Darstellung aus Fig. 3 mit Ausnahme dessen, dass das Stellelement 122 in der zweiten Position 362 angeordnet ist. Hierbei ist das Stellelement 122 von dem ersten Endanschlag 126 und von dem zweiten Endanschlag 128 beabstandet angeordnet.

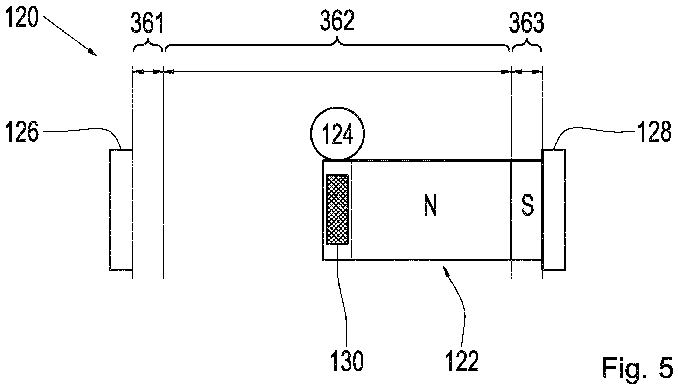

Fig. 5 zeigt eine schematische Darstellung eines dritten Betätigungszustands der Aktorvorrichtung 120 aus Fig. 1. die Darstellung in Fig. 5 entspricht der Darstellung aus Fig. 3 bzw. Fig. 4 mit Ausnahme dessen, dass das Stellelement 122 in der dritten Position 363 angeordnet ist. Dabei ist das Stellelement 122 an dem zweiten Endanschlag 128 angeordnet. Genauer gesagt befindet sich der andere der Endabschnitte des Stellelements 122 in Anlage gegen den zweiten Endanschlag 128.

Unter Bezugnahme auf die vorstehend beschriebenen Figuren ist erkennbar, dass mittels der Ermittlungseinrichtung 144 des Steuergerätes 140 bzw. im Schritt 220 des Ermittelns die Position des Stellelements 122 als die erste Position 361 an dem ersten Endanschlag 126, als die zweite Position 362 zwischen den Endanschlägen 126 und 128 oder als die dritte Position 363 an dem zweiten Endanschlag 128 ermittelbar ist. Dabei sind die erste Position 361 oder die dritte Position 363 abhängig von der Antriebsrichtung der Antriebseinrichtung 124 ermittelbar, wenn auf eine Signalflanke des Sensorsignals 135 hin die Leistungsaufnahme der Antriebseinrichtung 124 eine vordefinierte Anstiegscharakteristik aufweist. Die vordefinierte Anstiegscharakteristik kann eine Steigung sein, die einen Schwellenwert übersteigt. Die zweite Position 362 ist unabhängig von der Antriebsrichtung der Antriebseinrichtung 124 bei Vorliegen eines Übergangsbereichs zwischen zwei Signalflanken des Sensorsignals 135 ermittelbar.

Ausgehend von der ersten Position 361 bzw. dem ersten Betätigungszustand wird die dritte Position 363 bzw. der dritte Betätigungszustand erreicht, indem die Antriebseinrichtung 124 beispielsweise gegen den Uhrzeigersinn angesteuert wird. Hierbei erfasst der Magnetfeldsensor 130 zunächst eine steigende und anschließend eine fallende Flanke des Sensorsignals 135 (oder umgekehrt bei einer anderen Ausführung des Stellelements 122), wobei ein Übergangsbereich zwischen der steigenden und der fallenden Flanke stellt die zweite Position 362 bzw. den zweiten Betätigungszustand darstellt. Nach der fallenden Flanke in dem Sensorsignal 135 steigt der Antriebsstrom an, da das Stellelement 122 gegen den zweiten mechanischen Endanschlag 128 fährt.

Ausgehend von der dritten Position 363 wird die erste Position 361 erreicht, indem die Antriebseinrichtung 124 beispielsweise im Uhrzeigersinn angesteuert wird. Hierbei erfasst der Magnetfeldsensor 130 zunächst eine steigende und anschließend eine fallende Flanke des Sensorsignals 135 (oder umgekehrt bei einer anderen Ausführung des Stellelements 122), wobei ein Übergangsbereich zwischen der steigenden und der fallenden Flanke stellt die zweite Position 362 darstellt. Nach der fallenden Flanke in dem Sensorsignal 135 steigt der Antriebsstrom an, da das Stellelement 122 gegen den ersten mechanischen Endanschlag 126 fährt.

Gemäß einem Ausführungsbeispiel ist mittels der Ansteuereinrichtung 150 bzw. im Schritt 250 des Ansteuerns die Antriebseinrichtung ansteuerbar, um das Stellelement 122 in eine Sollposition zu bewegen. Ansprechend darauf ist insbesondere mittels der Ermittlungseinrichtung 144 bzw. durch Ausführen zumindest des Schrittes 210 des Einlesens und des Schrittes 220 des Ermittelns bestimmbar, ob sich das Stellelement 192 ansprechend auf das Ansteuersignal 155 bzw. den Schritt 250 des Ansteuerns bewegt oder nicht. Auch ist gemäß einem Ausführungsbeispiel mittels der Ermittlungseinrichtung 144 bzw. im Schritt 220 des Ermittelns ein Signalverlauf des Sensorsignals 135 unter Verwendung der Antriebsrichtung und/oder der Leistungsaufnahme der Antriebseinrichtung 124 auf Plausibilität prüfbar.

Anders ausgedrückt kann auf Vorgabe der Sollposition die aktuelle Position des Stellelements 122 bzw. der aktuelle Betätigungszustand der Aktorvorrichtung 120 geprüft werden, falls nach einer Initialisierung eine Ist-Position bzw. ein Ist-Betätigungszustand nicht bekannt sein sollte. Die erste Position 361 kann geprüft werden, indem die Antriebseinrichtung 124 gegen den Uhrzeigersinn bestromt wird. Gibt es keinen Signalwechsel in dem Sensorsignal 135 und einen ansteigenden Motorstrom, so ist die erste Position 361 erreicht. Die dritte Position 361 kann geprüft werden, indem die Antriebseinrichtung 124 im Uhrzeigersinn bestromt wird. Gibt es keinen Signalwechsel in dem Sensorsignal 135 und einen ansteigenden Motorstrom, so ist die dritte Position 363 erreicht.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 110: Aktorsystem
- 120: Aktorvorrichtung
- 122: Stellelement
- 124: Antriebseinrichtung
- 125: Antriebsignal
- 126: erster Endanschlag
- 128: zweiter Endanschlag
- 130: Magnetfeldsensor
- 135: Sensorsignal
- 140: Steuergerät
- 142: Einleseeinrichtung
- 144: Ermittlungseinrichtung
- 145: Positionsinformation
- 146: Erzeugungseinrichtung
- 147: Zustandssignal
- 148: Bereitstellungseinrichtung
- 150: Ansteuereinrichtung
- 155: Ansteuersignal
- 200: Verfahren zum Betreiben
- 210: Schritt des Einlesens
- 220: Schritt des Ermittelns
- 230: Schritt des Erzeugens
- 240: Schritt des Bereitstellens
- 250: Schritt des Ansteuerns
- 361: erste Position
- 362: zweite Position
- 363: dritte Position

## Patentansprüche

1. Verfahren (200) zum Betreiben einer Aktorvorrichtung (120), wobei die Aktorvorrichtung (120) ein magnetisches Stellelement (122), zumindest einen Magnetfeldsensor (130) zum Erfassen eines Magnetfeldes des Stellelements (122) und eine Antriebseinrichtung (124) zum Bewegen des Stellelements (122) zwischen zwei mechanischen Endanschlägen (126, 128) relativ zu dem zumindest einen Magnetfeldsensor (130) aufweist, wobei das Verfahren (200) zumindest folgende Schritte aufweist:
Einlesen (210) eines Sensorsignals (135) von einer Schnittstelle zu dem zumindest einen Magnetfeldsensor (130) und eines Antriebssignals (125) von einer Schnittstelle zu der Antriebseinrichtung (124), wobei das Sensorsignal (135) mindestens eine Magnetfeldcharakteristik eines Magnetfeldes des Stellelements (122) repräsentiert, wobei das Antriebssignal (125) eine Antriebsrichtung und eine Leistungsaufnahme der Antriebseinrichtung (124) repräsentiert;
Ermitteln (220) einer Position (316, 362, 363) des Stellelements (122) unter Verwendung des Sensorsignals (135) und des Antriebssignals (125);
Erzeugen (230) eines Zustandssignals (147) unter Verwendung der ermittelten Position (316, 362, 363), wobei das Zustandssignal (147) einen Betätigungszustand der Aktorvorrichtung (120) repräsentiert; und
Bereitstellen (240) des Zustandssignals (147) zur Ausgabe an einer Ausgabeschnittstelle.

2. Verfahren (200) gemäß Anspruch 1, **dadurch gekennzeichnet, dass** im Schritt (220) des Ermittelns die Position (316, 362, 363) des Stellelements (122) unter Verwendung eines Verlaufs zumindest einer Signalflanke des Sensorsignals (135) ermittelt wird.

3. Verfahren (200) gemäß einem der vorangegangenen Ansprüche, **dadurch gekennzeichnet, dass** im Schritt (220) des Ermittelns die Position (316, 362, 363) des Stellelements (122) unter Verwendung der Antriebsrichtung und/oder der Leistungsaufnahme der Antriebseinrichtung (124) ermittelt wird.

4. Verfahren (200) gemäß einem der vorangegangenen Ansprüche, **dadurch gekennzeichnet, dass** im Schritt (220) des Ermittelns die Position (316, 362, 363) des Stellelements (122) als eine erste Position (361) an einem ersten der Endanschläge (126, 128), als eine zweite Position (362) zwischen den Endanschlägen (126, 128) oder als eine dritte Position (363) an einem zweiten der Endanschläge (126, 128) ermittelt wird.

5. Verfahren (200) gemäß Anspruch 4, **dadurch gekennzeichnet, dass** im Schritt (220) des Ermittelns die erste Position (361) oder die dritte Position (363) abhängig von der Antriebsrichtung der Antriebseinrichtung (124) ermittelt wird, wenn auf eine Signalflanke des Sensorsignals (135) hin die Leistungsaufnahme der Antriebseinrichtung (124) eine vordefinierte Anstiegscharakteristik aufweist, und die zweite Position (362) unabhängig von der Antriebsrichtung der Antriebseinrichtung (124) bei Vorliegen eines Übergangsbereichs zwischen zwei Signalflanken des Sensorsignals (135) ermittelt wird.

6. Verfahren (200) gemäß einem der vorangegangenen Ansprüche, **gekennzeichnet durch** einen Schritt (250) des Ansteuerns der Antriebseinrichtung (124), wobei im Schritt (250) des Ansteuerns die Antriebseinrichtung (124) unter Verwendung des Antriebssignals (125) und/oder des Zustandssignals (147) angesteuert wird.

7. Verfahren (200) gemäß Anspruch 6, **dadurch gekennzeichnet, dass** im Schritt (250) des Ansteuerns die Antriebseinrichtung (124) angesteuert wird, um das Stellelement (122) in eine Sollposition zu bewegen, wobei ansprechend auf den Schritt (250) des Ansteuerns zumindest der Schritt (210) des Einlesens und der Schritt (220) des Ermittelns ausgeführt werden, um zu bestimmen, ob sich das Stellelement (122) ansprechend auf den Schritt (250) des Ansteuerns bewegt.

8. Verfahren (200) gemäß einem der vorangegangenen Ansprüche, **dadurch gekennzeichnet, dass** im Schritt (220) des Ermittelns ein Signalverlauf des Sensorsignals (135) unter Verwendung der Antriebsrichtung und/oder der Leistungsaufnahme der Antriebseinrichtung (124) auf Plausibilität geprüft wird.

9. Steuergerät (140), mit
einer Schnittstelle zum Einlesen (210) eines Sensorsignals (135) von zumindest einem Magnetfeldsensor (130),
einer Schnittstelle zum Einlesen eines Antriebssignals (125) von einer Antriebseinrichtung (124), und
einer Ausgabeschnittstelle zur Ausgabe eines Zustandssignals (147),
wobei das Steuergerät dazu ausgebildet ist, die Schritte eines Verfahrens (200) gemäß einem der vorangegangenen Ansprüche auszuführen.

10. Aktorsystem (110), **dadurch gekennzeichnet, dass** das Aktorsystem (110) zumindest folgende Merkmale aufweist:
zumindest eine Aktorvorrichtung (122), die ein magnetisches Stellelement (122), zumindest einen Magnetfeldsensor (130) zum Erfassen eines Magnetfeldes des Stellelements (122) und eine Antriebseinrichtung (124) zum Bewegen des Stellelements (122) zwischen zwei mechanischen Endanschlägen (126, 128) relativ zu dem zumindest einen Magnetfeldsensor (130) aufweist; und
ein Steuergerät (140) gemäß Anspruch 9, wobei das Steuergerät (140) signalübertragungsfähig mit der zumindest einen Aktorvorrichtung (120) verbindbar oder verbunden ist.

11. Aktorsystem (110) gemäß Anspruch 10, **dadurch gekennzeichnet, dass** das Stellelement (122) länglich ausgeformt ist, wobei das Stellelement (122) an zwei voneinander abgewandten Endabschnitten einen ersten Magnetpol (S) und in einem Mittelabschnitt zwischen den Endabschnitten einen zweiten Magnetpol (N) aufweist.

12. Aktorsystem (110) gemäß einem der Ansprüche 10 bis 11, **dadurch gekennzeichnet, dass** der zumindest eine Magnetfeldsensor (130) zwischen den Endanschlägen (126, 128) angeordnet ist.

13. Aktorsystem (110) gemäß einem der Ansprüche 10 bis 12, **dadurch gekennzeichnet, dass** die Aktorvorrichtung (120) eine Mehrzahl von Magnetfeldsensoren (130) aufweist.

14. Aktorsystem (110) gemäß einem der Ansprüche 10 bis 13, **dadurch gekennzeichnet, dass** die Aktorvorrichtung (120) oder das Steuergerät (140) eine Ansteuereinrichtung (150) zum Ansteuern der Antriebseinrichtung (124) aufweist.

15. Computerprogrammprodukt mit Programmcode zur Durchführung eines Verfahrens (200) nach einem der vorangegangenen Ansprüche, wenn das Computerprogrammprodukt auf einem Steuergerät (140) gemäß Anspruch 9 ausgeführt wird.

## Claims

1. Method (200) for operating an actuator device (120), wherein the actuator device (120) has a magnetic actuating element (122), at least one magnetic field sensor (130) for detecting a magnetic field of the actuating element (122) and a drive mechanism (124) for moving the actuating element (122) between two mechanical end stops (126, 128) in relation to the at least one magnetic field sensor (130), wherein the method (200) comprises at least the following steps:
reading in (210) a sensor signal (135) from an interface with respect to the at least one magnetic field sensor (130) and a drive signal (125) from an interface with respect to the drive mechanism (124), wherein the sensor signal (135) represents at least one magnetic field characteristic of a magnetic field of the actuating element (122), wherein the drive signal (125) represents a driving direction and a power consumption of the drive mechanism (124);
determining (220) a position (316, 362, 363) of the actuating element (122) by using the sensor signal (135) and the drive signal (125);
generating (230) a state signal (147) by using the determined position (316, 362, 363), wherein the state signal (147) represents an actuating state of the actuator device (120); and
providing (240) the state signal (147) for outputting at an output interface.

2. Method (200) according to Claim 1, **characterized in that**, in the determining step (220), the position (316, 362, 363) of the actuating element (122) is determined by using a progression of at least one signal edge of the sensor signal (135).

3. Method (200) according to one of the preceding claims, **characterized in that**, in the determining step (220), the position (316, 362, 363) of the actuating element (122) is determined by using the driving direction and/or the power consumption of the drive mechanism (124).

4. Method (200) according to one of the preceding claims, **characterized in that**, in the determining step (220), the position (316, 362, 363) of the actuating element (122) is determined as a first position (361) at a first of the end stops (126, 128), as a second position (362) between the end stops (126, 128) or as a third position (363) at a second of the end stops (126, 128).

5. Method (200) according to Claim 4, **characterized in that**, in the determining step (220), the first position (361) or the third position (363) is determined, dependent on the driving direction of the drive mechanism (124), when the power consumption of the drive mechanism (124) has a predefined rising characteristic in relation to a signal edge of the sensor signal (135), and the second position (362) is determined, independently of the driving direction of the drive mechanism (124), when there is a transitional region between two signal edges of the sensor signal (135).

6. Method (200) according to one of the preceding claims, **characterized by** an activating step (250) for activating the drive mechanism (124), wherein, in the activating step (250), the drive mechanism (124) is activated by using the drive signal (125) and/or the state signal (147).

7. Method (200) according to Claim 6, **characterized in that**, in the activating step (250), the drive mechanism (124) is activated in order to move the actuating element (122) into a target position, wherein at least the reading-in step (210) and the determining step (220) are performed in response to the activating step (250), in order to determine whether the actuating element (122) moves in response to the activating step (250).

8. Method (200) according to one of the preceding claims, **characterized in that**, in the determining step (220), a signal progression of the sensor signal (135) is checked for plausibility by using the driving direction and/or the power consumption of the drive mechanism (124).

9. Controller (140), with
an interface for reading in (210) a sensor signal (135) from at least one magnetic field sensor (130),
an interface for reading in a drive signal (125) from a drive mechanism (124), and
an output interface for outputting a state signal (147), wherein the controller is designed to perform the steps of a method (200) according to one of the preceding claims.

10. Actuator system (110), **characterized in that** the actuator system (110) comprises at least the following features:
at least one actuator device (122), which has a magnetic actuating element (122), at least one magnetic field sensor (130) for detecting a magnetic field of the actuating element (122) and a drive mechanism (124) for moving the actuating element (122) between two mechanical end stops (126, 128) in relation to the at least one magnetic field sensor (130); and
a controller (140) according to Claim 9, wherein the controller (140) can be connected or is connected to the at least one actuator device (120) in a way allowing signal transmission.

11. Actuator system (110) according to Claim 10, **characterized in that** the actuating element (122) is elongated, wherein the actuating element (122) has a first magnetic pole (S) at two opposing end sections and a second magnetic pole (N) in a middle section between the end sections.

12. Actuator system (110) according to either of Claims 10 and 11, **characterized in that** the at least one magnetic field sensor (130) is arranged between the end stops (126, 128).

13. Actuator system (110) according to one of Claims 10 to 12, **characterized in that** the actuator device (120) has a plurality of magnetic field sensors (130).

14. Actuator system (110) according to one of Claims 10 to 13, **characterized in that** the actuator device (120) or the controller (140) has an activating mechanism (150) for activating the drive mechanism (124).

15. Computer program product with program code for carrying out a method (200) according to one of the preceding claims when the computer program product is run on a controller (140) according to Claim 9.

## Revendications

1. Procédé (200) permettant de faire fonctionner un dispositif actionneur (120), le dispositif actionneur (120) présentant un élément d'actionnement magnétique (122), au moins un capteur de champ magnétique (130) pour détecter un champ magnétique de l'élément d'actionnement (122) et un équipement d'entraînement (124) pour déplacer l'élément d'actionnement (122) entre deux butées d'extrémité mécaniques (126, 128) par rapport audit au moins un capteur de champ magnétique (130), le procédé (200) présentant au moins les étapes suivantes :
lire (210) un signal de capteur (135) à partir d'une interface avec ledit au moins un capteur de champ magnétique (130) et un signal d'entraînement (125) à partir d'une interface avec l'équipement d'entraînement (124), le signal de capteur (135) représentant au moins une caractéristique de champ magnétique d'un champ magnétique de l'élément d'actionnement (122), le signal d'entraînement (125) représentant une direction d'entraînement et une puissance absorbée de l'équipement d'entraînement (124) ;
établir (220) une position (316, 362, 363) de l'élément d'actionnement (122) en utilisant le signal de capteur (135) et le signal d'entraînement (125) ;
générer (230) un signal d'état (147) en utilisant la position établie (316, 362, 363), le signal d'état (147) représentant un état d'actionnement du dispositif actionneur (120) ; et
fournir (240) le signal d'état (147) pour la sortie au niveau d'une interface de sortie.

2. Procédé (200) selon la revendication 1, **caractérisé en ce qu'**à l'étape (220) d'établissement, la position (316, 362, 363) de l'élément d'actionnement (122) est établie en utilisant un tracé d'au moins un flanc de signal du signal de capteur (135).

3. Procédé (200) selon l'une quelconque des revendications précédentes, **caractérisé en ce qu'**à l'étape (220) d'établissement, la position (316, 362, 363) de l'élément d'actionnement (122) est établie en utilisant la direction d'entraînement et/ou la puissance absorbée de l'équipement d'entraînement (124) .

4. Procédé (200) selon l'une quelconque des revendications précédentes, **caractérisé en ce qu'**à l'étape (220) d'établissement, la position (316, 362, 363) de l'élément d'actionnement (122) est établie comme une première position (361) à une première des butées d'extrémité (126, 128), comme une deuxième position (362) entre les butées d'extrémité (126, 128), ou comme une troisième position (363) à une deuxième des butées d'extrémité (126, 128).

5. Procédé (200) selon la revendication 4, **caractérisé en ce qu'**à l'étape (220) d'établissement, la première position (361) ou la troisième position (363) est établie en fonction de la direction d'entraînement de l'équipement d'entraînement (124) si suite à un flanc de signal du signal de capteur (135) la puissance absorbée de l'équipement d'entraînement (124) présente une caractéristique de montée prédéfinie, et la deuxième position (362) est établie indépendamment de la direction d'entraînement de l'équipement d'entraînement (124) si une zone de transition existe entre deux flancs de signal du signal de capteur (135).

6. Procédé (200) selon l'une quelconque des revendications précédentes, **caractérisé par** une étape (250) de pilotage de l'équipement d'entraînement (124), dans lequel, à l'étape (250) de pilotage, l'équipement d'entraînement (124) est piloté en utilisant le signal d'entraînement (125) et/ou le signal d'état (147).

7. Procédé (200) selon la revendication 6, **caractérisé en ce qu'**à l'étape (250) de pilotage, l'équipement d'entraînement (124) est piloté pour déplacer l'élément d'actionnement (122) dans une position de consigne, dans lequel, en réponse à l'étape (250) de pilotage, au moins l'étape (210) de lecture et l'étape (220) d'établissement sont effectuées pour déterminer si l'élément d'actionnement (122) se déplace en réponse à l'étape (250) de pilotage.

8. Procédé (200) selon l'une quelconque des revendications précédentes, **caractérisé en ce qu'**à l'étape (220) d'établissement, un tracé de signal du signal de capteur (135) est vérifié quant à sa plausibilité en utilisant la direction d'entraînement et/ou la puissance absorbée de l'équipement d'entraînement (124).

9. Appareil de commande (140), comprenant
une interface pour lire (210) un signal de capteur (135) d'au moins un capteur de champ magnétique (130),
une interface pour lire un signal d'entraînement (125) d'un équipement d'entraînement (124), et
une interface de sortie pour sortir un signal d'état (147),
l'appareil de commande étant réalisé pour effectuer les étapes d'un procédé (200) selon l'une quelconque des revendications précédentes.

10. Système d'actionneur (110), **caractérisé en ce que** le système d'actionneur (110) présente au moins les particularités suivantes :
au moins un dispositif actionneur (122) qui présente un élément d'actionnement magnétique (122), au moins un capteur de champ magnétique (130) pour détecter un champ magnétique de l'élément d'actionnement (122) et un équipement d'entraînement (124) pour déplacer l'élément d'actionnement (122) entre deux butées d'extrémité mécaniques (126, 128) par rapport audit au moins un capteur de champ magnétique (130) ; et
un appareil de commande (140) selon la revendication 9, l'appareil de commande (140) pouvant être ou étant relié audit au moins un dispositif actionneur (120) de manière à pouvoir transmettre des signaux.

11. Système d'actionneur (110) selon la revendication 10, **caractérisé en ce que** l'élément d'actionnement (122) présente une forme allongée, l'élément d'actionnement (122) présentant sur deux parties d'extrémité détournées l'une de l'autre un premier pôle magnétique (S) et dans une partie centrale entre les parties d'extrémité un deuxième pôle magnétique (N).

12. Système d'actionneur (110) selon l'une quelconque des revendications 10 à 11, **caractérisé en ce que** ledit au moins un capteur de champ magnétique (130) est disposé entre les butées d'extrémité (126, 128).

13. Système d'actionneur (110) selon l'une quelconque des revendications 10 à 12, **caractérisé en ce que** le dispositif actionneur (120) présente une pluralité de capteurs de champ magnétique (130).

14. Système d'actionneur (110) selon l'une quelconque des revendications 10 à 13, **caractérisé en ce que** le dispositif actionneur (120) ou l'appareil de commande (140) présente un dispositif de pilotage (150) pour piloter l'équipement d'entraînement (124).

15. Produit de programme informatique comprenant du code programme pour exécuter un procédé (200) selon l'une quelconque des revendications précédentes lorsque le produit de programme informatique est exécuté sur un appareil de commande (140) selon la revendication 9.
